Europäisches Patentamt

European Patent Office

Office européen des brevets

(11) Veröffentlichungsnummer : **0 374 453 B1**

(12) **EUROPÄISCHE PATENTSCHRIFT**

(45) Veröffentlichungstag der Patentschrift :
**30.12.92 Patentblatt 92/53**

(51) Int. Cl.⁵ : **B60R 25/02**

(21) Anmeldenummer : **89120655.9**

(22) Anmeldetag : **08.11.89**

(54) **Lenkradverriegelung.**

(30) Priorität : **20.12.88 US 287105**

(43) Veröffentlichungstag der Anmeldung :
**27.06.90 Patentblatt 90/26**

(45) Bekanntmachung des Hinweises auf die
Patenterteilung :
**30.12.92 Patentblatt 92/53**

(84) Benannte Vertragsstaaten :
**AT BE CH DE ES FR GB GR IT LI LU NL SE**

(56) Entgegenhaltungen :
**AU-A- 586 805**
**DE-U- 9 001 288**
**FR-A- 2 566 348**
**GB-A- 1 467 816**
**US-A- 3 462 982**
**US-A- 4 738 127**

(73) Patentinhaber : **WINNER INTERNATIONAL**
**32 West State Street**
**Sharon Pennsylvania 16146 (US)**

(72) Erfinder : **Wu, Jinn Fu**
**No. 127 Hai Huan Street**
**Tainan (TW)**

(74) Vertreter : **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**W-5000 Köln 1 (DE)**

**Beschreibung**

Die Erfindung betrifft eine an einem Fahrzeuglenkrad montierte Diebstahlsicherungsvorrichtung mit einem rohrförmigen Teil, der sich längs einer inneren Achse erstreckt und an dem erste Einhakmittel befestigt sind, die von innen in den Kranz des Lenkrades eingreifen; mit einem langgestreckten, stabförmigen Teil, der teleskopartig von dem rohrförmigen Teil aufgenommen wird und an dem zweite Einhakmittel befestigt sind, die den ersten Einhakmitteln gegenüberliegen und von innen in den Kranz des Lenkrades eingreifen; wobei einer der Teile ein über sein Einhakmittel vorstehendes Teil aufweist, das im Fahrzeuginneren anstoßen soll, wenn das Lenkrad mit der daran befestigten Diebstahlsicherungsvorrichtung gedreht wird; mit Verriegelungsmitteln, die ein am rohrförmigen Teil angebrachtes Schloßgehäuse aufweisen und dem stabförmigen Teil eine Teleskopbewegung aus einer zusammengeschobenen Stellung, in der sich der stabförmige Teil im wesentlichen im Inneren des rohrförmigen Teiles befindet, in eine Verriegelungsstellung gestatten, in der der stabförmige Teil axial aus dem rohrförmigen Teil so weit herausgezogen ist, daß die Einhakmittel den Lenkradkranz von innen her berühren.

Es ist eine Diebstahlsicherungsvorrichtung dieser Art bekannt (US-A-47 38 127), bei der der stabförmige Teil flache, gewölbte Ringnuten aufweist, in die als Verriegelungselement eine Kugel eingreift, die bei betätigtem Schloß eine Axialbewegung des stabförmigen Teiles verhindert. Diese bekannte Sicherungsvorrichtung erfüllt zwar ihren Zweck, ist aber umständlich zu montieren, da die beiden axial gegeneinander verschiebbaren rohrförmigen und stabförmigen Teile nach dem Anbringen der Sicherungsvorrichtung am Lenkrad so lange festgehalten werden müssen, bis das Schloß mit dem Schlüssel betätigt wurde und die Teile gegeneinander verriegelt sind.

Es ist auch eine am Lenkrad anzubringende Sicherungsstange mit Klinkengesperre bekannt (US-A-3 462 982), die jedoch nicht teleskopierbar ist, sondern eine unveränderliche Länge hat. Um die Vorrichtung am Lenkrad zu befestigen, muß einer der Haken, die in den Lenkradkranz eingreifen, auf der Sicherungsstange längs verschoben werden, wobei das am Haken befestigte Schloß an einer Zahnstange entlanggleitet, die auf der Sicherungsstange aufgenietet ist. Der Haken läßt sich zwar auch bei abgeschlossenem Schloß nach außen verschieben und mit dem Lenkradkranz in Eingriff bringen, es ist aber nicht möglich, die Haken gegeneinander oder gegenüber der Sicherungsstange zu verdrehen. Die Haken können deshalb nicht zwischen Lenkradspeichen in Stellung gebracht werden, da hierzu mindestens einer der Haken seitlich in den Lenkradkranz eingeführt werden muß. Infolge der unveränderlichen Länge ist diese bekannte Sicherungsvorrichtung sehr sperrig und nimmt im demontierten Zustand viel Raum ein.

Bei Diebstahlsicherungen, die mit Fußhebelverriegelungen arbeiten (Fr-A-2 566 348), ist es auch bekannt, am Fußhebel eine Zahnstange mit Ringzähnen anzubringen, in die ein keilförmiger Riegel des Schlosses beim Zuschließen eingreift. Wenn dann der Fußhebel niedergetreten wird, gleitet der federbelastete Schließhebel an der Zahnstange entlang und rastet bei niedergetretenem Fußhebel ein, so daß der Fußhebel nur nach dem Entriegeln des Schlosses wieder frei wird. Diese Art der Sicherungsvorrichtung ist umständlich zu bedienen, da sie im Fußraum eines Fahrzeuges liegt und vom Fahrersitz schlecht erreicht werden kann.

Aufgabe der Erfindung ist es, eine Diebstahlsicherungsvorrichtung der eingangs näher erläuterten Art so auszubilden, daß sie einfach und bequem zu handhaben und am Lenkrad zu befestigen ist und im demontierten Zustand wenig Raum einnimmt.

Diese Aufgabe wird mit der Erfindung dadurch gelöst, daß der stabförmige Teil mehrere ihn rings umgebende Klinkenzähne aufweist, welche in Längsrichtung einander benachbart sind und denjenigen Teil des stabförmigen Teiles umgeben, der teleskopartig in dem rohrförmigen Teil aufgenommen werden kann, und daß jeder Klinkenzahn eine flache, ringförmige, zu der inneren Achse senkrecht stehende Anschlagfläche und eine konische Auflagefläche aufweist, die in einer dem zweiten Einhakmittel entgegengesetzten Richtung sich erweitert und die im Durchmesser größer wird, wenn der stabförmige Teil teleskopartig aus dem rohrförmigen Teil herausgezogen wird und daß eine im Schloßgehäuse angeordnete, durch ein Federmittel belastete Schaltratsche in Berührung mit den Klinkenzahnflächen gehalten wird, um eine gegenseitige Verdrehung von stabförmigem Teil und rohrförmigem Teil zu ermöglichen, wenn der stabförmige Teil aus dem rohrförmigen Teil herausgezogen wird, während eine Axialbewegung des stabförmigen Teiles in den rohrförmigen Teil hinein dadurch verhindert wird, daß die Schaltratsche gegen eine der senkrechten Anschlagflächen stößt und daß im Schloßgehäuse ein mit einem Schlüssel betätigbares Schloß vorgesehen ist, das die Schaltratsche entgegen der Federwirkung aus dem Eingriff der Schaltzähne zurückzieht, wenn der Schlüssel betätigt wird, um dem stabförmigen Teil zu gestatten, sich teleskopartig in beiden Richtungen zu bewegen.

Durch die Ausbildung des Verriegelungsmechanismus als Klinkengesperre haben die beiden Teile der Sicherungsvorrichtung in der Verriegelungsstellung jederzeit eine eindeutige, definierte Lage, da der Schloßriegel stets hinter einen der Zähne des stabförmigen Teiles der Verriegelungseinrichtung greift. Dieser Verriegelungszustand kann schon hergestellt werden, wenn die beiden langgestreckten Teile der Verriegelungsvorrichtung ganz ineinandergeschoben sind und den kleinstmöglichen Raum einnehmen. Beide Teile sind dann sicher miteinander verbunden und können wie ein einziges Teil verstaut und einfach gehandhabt werden.

Um die Sicherungsvorrichtung nach der Erfindung am Lenkrad zu befestigen, ist es lediglich notwendig, jedes der beiden miteinander verbundenen Teile mit einer Hand zu fassen und beide Teile über dem Lenkrad so weit auseinanderzuziehen, bis die beiden nach außen gerichteten Haken in den Lenkradkranz eingreifen. Hierbei ist es bei der Vorrichtung nach der Erfindung möglich, beim Auseinanderziehen der beiden Teile diese gleichzeitig um ihre Längsachse gegeneinander zu verdrehen und hierdurch die Haken der Sicherungsvorrichtung in ihre jeweils günstigste Position zu bringen. Ein separates Abschließen ist nicht erforderlich, weil sich das Schloß schon vorher in seiner Verriegelungsstellung befand.

Besonders zweckmäßig ist es, wenn der stabförmige Teil in einem zylindrischen Rohr gleitet, das einerseits an dem rohrförmigen Teil und andererseits an einem Teil des Schloßgehäuses befestigt ist, welches das Schloß enthält. Das Schloßgehäuse weist dann eine an einem Ende verschlossene Bohrung auf, die sich zu einer in der Wandung des Rohres angeordneten Öffnung erstreckt. In der Bohrung ist ein Riegel angeordnet, dessen eines Ende in die Öffnung eintreten kann und der Riegel weist eine sich in dessen Längsrichtung erstreckende Ausnehmung von begrenzter Länge auf, die mit einem Drehzapfen zusammenwirkt, wenn dieser in die Entriegelungsstellung bewegt wird.

In der an einem Ende verschlossenen Bohrung ist eine Feder zwischen dem Riegel und dem Ende der Bohrung angeordnet, die den Riegel gegen die Klinkenzähne auf dem stabförmigen Teil drückt, wenn sich der Drehzapfen in seiner Verriegelungsstellung befindet. Hierdurch wird das Spiel zwischen dem stabförmigen Teil und dem Schloßgehäuse aufgehoben und der stabförmige Teil berührt das Gehäuse diametral gegenüber der Öffnung, so daß der stabförmige Teil präzise wirksam einrasten kann, wenn er axial aus dem rohrförmigen Teil und dem Schloßgehäuse herausgezogen wird.

Jeder Klinkenzahn hat zweckmäßig auch eine sich in Längsrichtung erstreckende, zylindrische Ruhefläche, die neben dem kleineren Durchmesser der kegelstumpfförmigen Fläche angeordnet ist und sich bis zu der Anschlagfläche eines benachbarten Zahnes erstreckt. Das Riegelende hat dann an seinem Ende eine Abflachung, die nicht größer ist als die Länge der Ruhefläche, um deutliche Anschlagpositionen zu schaffen, wenn der stabförmige Teil aus dem rohrförmigen Teil herausgezogen wird.

Besonders vorteilhaft ist es, wenn der stabförmige Teil die Form einer Stange mit kreisrundem querschnitt hat und der rohrförmige Teil als Rohr mit kreisrundem querschnitt ausgebildet ist. Bei einer solchen Ausbildung ist eine Verdrehung der Haken gegeneinander möglich. Dies erleichtert das Anbringen um die Speichen herum, welche den Lenkradkranz an horizontal gegenüberliegenden Stellen verbinden, wo die Haken vorzugsweise befestigt werden.

Der Riegel kann als Riegelstift ausgebildet sein, der in seinem mittleren Teil eine Ausnehmung mit einer Drehzapfenfläche und an seinem freien, der Öffnung zugewandten Ende eine schräge Stirnfläche aufweist, die mit den konischen Flächen der Zähne des stabförmigen Teiles zusammenwirkt. Eine Feder bringt den Riegelstift in Eingriff mit den Zähnen des stabförmigen Teiles, wenn dieser sich im Durchlaß des Schloßgehäuses befindet.

Im Schloßgehäuse kann eine zweite Bohrung angeordnet sein, deren inneres Ende in die erste Bohrung mündet und in der ein Schließzylinder mit einem Drehzapfen angeordnet ist, der in die Ausnehmung des Riegelstiftes eingreift und diesen bei seiner Drehung mit dem Schließzylinder gegen die Feder drückt, wenn er aus seiner Verriegelungsstellung in seine Entriegelungsstellung gebracht wird.

Da das zweite Einhakmittel gegenüber dem ersten Einhakmittel um seine Längsachse gedreht werden kann und hierdurch die Haken auch an Lenkradspeichen befestigt werden können, kann die Sicherungsvorrichtung auch in jener bevorzugten Stellung am Lenkrad befestigt werden, in der sie sich horizontal quer über das Lenkrad vor dem sitzenden Benutzer erstreckt, auch wenn sich eine Lenkradspeiche dort befindet, wo ein Haken angebracht werden soll, auch wenn das Fahrzeug geparkt ist und das Lenkrad so gedreht ist, daß die Räder zur Seite gedreht und beispielsweise auf einem Hügel od. dgl. zum Bordstein hin eingeschlagen sind. Die beliebige Befestigung der Sicherungsvorrichtung am Lenkrad ermöglicht auch eine Montage,ohne die am Lenkrad angebrachte Hupe zu berühren oder auszulösen.

Ein weiterer Vorteil der Erfindung liegt darin, daß die Verriegelungselemente vollständig gekapselt und vor dem Angriff eines Brecheisens oder eines anderen kriminellen Einbruchwerkzeuges geschützt sind.

Weitere Vorteile und Merkmale der Erfindung ergeben sich aus der nachfolgenden Beschreibung und den Zeichnungen, in denen eine bevorzugte Ausführungsform der Erfindung näher erläutert wird. Es zeigt:

Fig. 1 eine an einem Lenkrad befestigte Lenkradverriegelung nach der Erfindung in einer perspektivischen Darstellung;

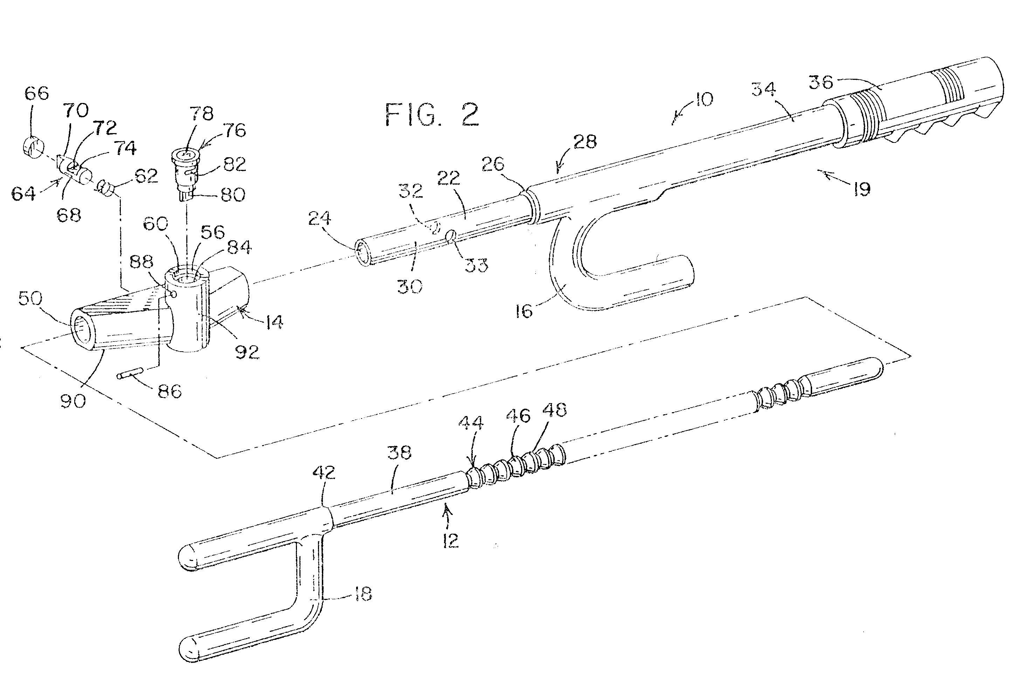

Fig. 2 eine auseinandergezogene, perspektivische Darstellung der Lenkradverriegelung nach Fig. 1;

Fig. 3 eine Draufsicht auf die Lenkradverriegelung nach Fig. 1;

Fig. 4 eine seitliche Ansicht der Lenkradverriegelung nach Fig. 1;

Fig. 5 den Gegenstand der Fig. 4 in einem Schnitt nach Linie V-V in vergrößertem Maßstab;

Fig. 6 den Gegenstand der Fig. 4 in einem Teil-Längsschnitt nach Linie VI-VI in vergrößertem Maßstab;

Fig. 7 einen Ausschnitt der Fig. 6, wobei sich der Riegel des Schlosses in einer Zwischenstellung befindet;

Fig. 8 eine Teildarstellung des Gegenstandes der Fig. 6, wobei sich der Riegel in entriegelter Stellung befindet, und

Fig. 9 eine Draufsicht auf die Lenkradverriegelung nach Fig. 1, die sich in einer anderen, auf dem Lenkrad befestigten Stellung befindet.

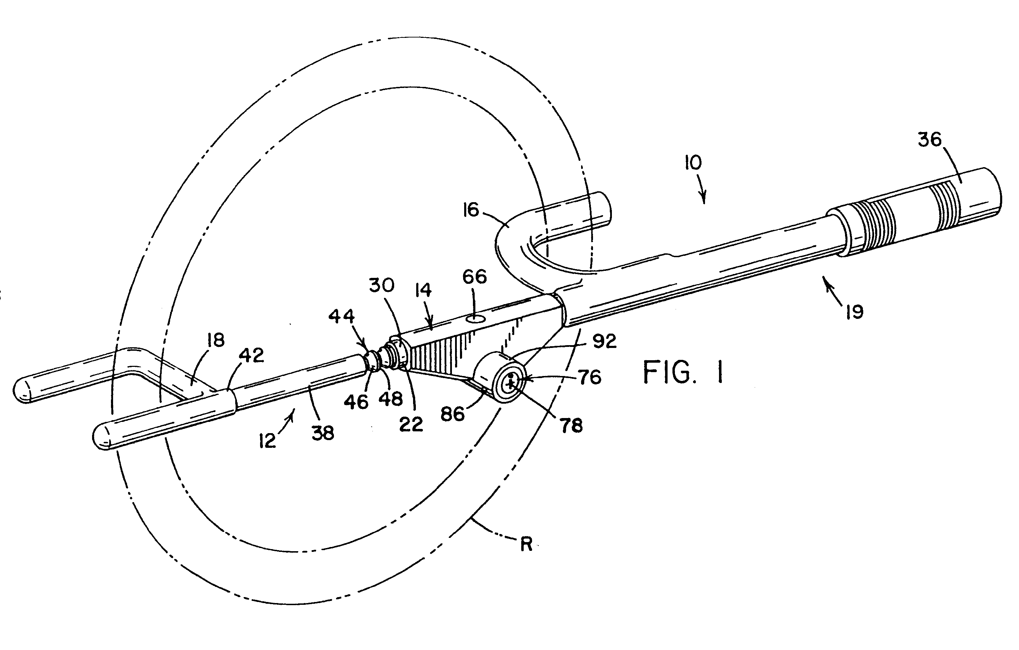

In Fig. 1 ist eine Lenkradverriegelung nach der Erfindung in einer perspektivischen, auseinandergezogenen Darstellung gezeigt. Die Lenkradverriegelung besteht im wesentlichen aus einem langgestreckten, rohrförmigen Teil 10, einem langgestreckten, stabförmigen Teil 12, der teleskopartig in dem rohrförmigen Teil 10 angeordnet ist und aus einem Schloßgehäuse 14. An dem rohrförmigen Teil 10 ist ein erstes Einhakmittel, nämlich ein Lenkradkranzhaken ken 16 und an dem stabförmigen Teil 12 ist ein zweites Einhakmittel, nämlich ein Lenkradkranzhaken 18 angeordnet, die an einander gegenüberliegenden Stellen von innen her in das Lenkrad eingreifen können. Das Schloßgehäuse 14 ist mit Mitteln versehen, mit denen der stabförmige Teil 12 gegenüber dem rohrförmigen Teil 10 an irgendeiner von mehreren, in axialem Abstand voneinander angeordneten Stellen in Stellung gebracht und verriegelt werden kann. Der rohrförmige Teil 10 hat einen vorspringenden Teil 19, der sich hinreichend weit genug über den ersten Lenkradkranzhaken 16 erstreckt, so daß er bei Drehung des Lenkrades gegen das Innere des Fahrzeugs stößt und auf diese Weise eine vollständige Drehung des Lenkrades verhindert.

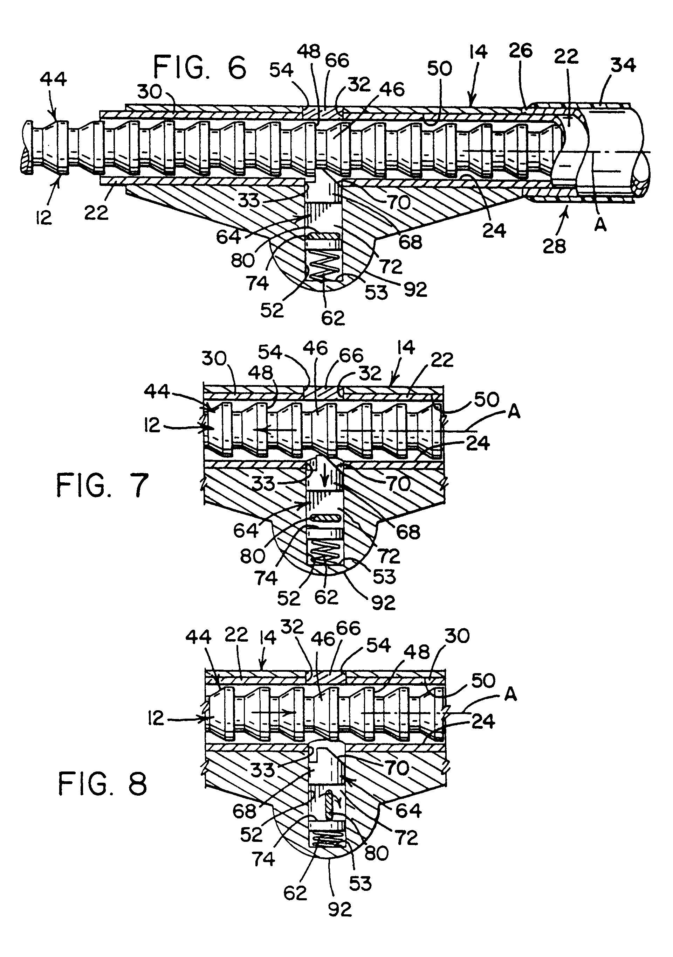

Genauer gesagt, ist der langgestreckte, rohrförmige Teil 10 ein langgestrecktes Rohr 22 mit kreisförmigem Querschnitt in Bezug auf eine Achse a. Das Rohr 22 hat einen zentralen Durchmesser 24 von kreisförmigem, zur Achse A konzentrischen Querschnitt und wird von einer äußeren Hülse 26 umgeben, die einen doppelwandigen Abschnitt 28 bildet, wie dies in Fig. 6 dargestellt ist. Ein Teil 30 des Rohres 22 erstreckt sich in Axialrichtung über das Ende des doppelwandigen Abschnittes 28 hinaus und hat zwei miteinander fluchtende Öffnungen 32,33.

An der äußeren Hülse 26 des doppelwandigen Abschnittes 28 ist an dem rohrförmigen Teil 10 ein erster Lenkradkranzhaken 16 starr befestigt, der eine im wesentlichen U-förmige Öffnung bildet, die sich axial in entgegengesetzter Richtung zu dem vorstehenden Teil 30 des rohrförmigen Teiles 10 erstreckt. Das Rohr 22 und die äußere Hülse 26 bestehen vorzugsweise aus Stücken eines genormten Stahlrohres, die zusammengeschweißt sind. Der erste Lenkradkranzhaken 16 ist ebenfalls vorzugsweise aus einem Standardstahlrohr in die U-förmige Gestalt gebogen oder in anderer Weise geformt und an der äußeren Hülse 26 festgeschweißt. Über die äußere Hülse 26 und den ersten Lenkradkranzhaken 16 ist ein strapazierfähiger Kunststoffüberzug 34 gezogen, um auf dem rohrförmigen Teil 10 eine abriebfeste Oberfläche zu schaffen. Am Ende des rohrförmigen Teiles 10 befindet sich ein Handgriff 36.

Der langgestreckte, stabförmige Teil 12 besteht aus einer langgestreckten Stange 38 mit kreisförmigem Querschnitt. Der Außendurchmesser der Stange 38 ist geringfügig kleiner als der Durchmesser des zentralen Durchlasses 24 im rohrförmigen Teil 10, so daß die Stange 38 sich teleskopartig in dem rohrförmigen Teil 10 frei bewegen kann. Am Ende der Stange 38 ist ein in den Zeichnungen in strichierten Linien dargestelltes, im wesentlichen L-förmiges Teil 40 starr befestigt, welches den zweiten Lenkradkranzhaken 18 bildet, der sich in einer zum ersten Lenkradkranzhaken 16 entgegengesetzten Richtung öffnet und an einer gegenüberliegenden Stelle des Lenkrades eingreift. Auf dem zweiten Lenkradkranzhaken 18 ist ein zweiter, strapazierfähiger Kunststoffüberzug vorgesehen.

Längs der Stange 38 sind mehrere Klinkenzähne oder Schaltzähne 44 in Längsrichtung im Abstand voneinander angeordnet. Jeder Klinkenzahn 44 hat eine konische Auflagefläche 46, die sich axial in einer vom zweiten Lenkradkranzhaken 18 entfernenden Richtung radial nach außen erstreckt und eine ringförmige Anschlagfläche 48, die senkrecht zur Achse A verläuft. Die Stange 38 und das im wesentlichen L-förmige Teil 40 bestehen vorzugsweise aus gehärtetem Einsatzstahl.

Das Schloßgehäuse 14 hat einen Durchlaß 50 mit kreisförmigem Querschnitt und einem Durchmesser, der dem Außendurchmesser des herausstehenden Teiles 30 des Rohres 22 entspricht, so daß das Schloßgehäuse 14 teleskopartig über den hervorstehenden Teil 30 geschoben und auf diesem befestigt werden kann. Das Schloßgehäuse 14 hat eine erste Bohrung 52, die sich lotrecht zur Achse A erstreckt und ein geschlossenes inneres Ende 53 und ein offenes äußeres Ende 54 aufweist. Die erste Bohrung 52 kreuzt den Schloßdurchlaß 50 und fluchtet mit den Öffnungen 32 und 33 in dem aus der Hülse 26 herausstehenden Teil 30.

Das Schloßgehäuse 14 hat ferner noch eine zweite Bohrung 56, deren inneres Ende 58 sich in die erste Bohrung 52 öffnet und ein nach außen offenes Ende 60 hat. Die im Inneren des Schloßgehäuses 14 angeordneten Verriegelungsmittel bestehen aus einer Schraubenfeder 62, die von dem geschlossenen inneren Ende 53 der ersten Bohrung 52 aus in axialer Richtung wirkt, einer Schaltratsche oder einem Riegel 64, der in der ersten Bohrung 52 angeordnet ist und sich von der Schraubenfeder 62 aus durch die Öffnung 33 hindurch in den zentralen Durchlaß 24 des zylindrischen Rohrs 22 erstreckt. Das offene, äußere Ende 54 der ersten Bohrung 52 wird durch einen Stopfen 66 verschlossen.

Der Riegel 64 besteht aus einem Riegelstift 68 mit einer schrägen Stirnfläche 70, einer Ausnehmung 72 und einer in der Ausnehmung 72 angeordneten Drehzapfenfläche 74. Zu den Verriegelungsmitteln gehört ferner noch ein Schließzylinder 76 mit einem Schlüsselloch 78, einem Drehzapfen 80 und einem Schlitz 82. Der Schließzylinder 67 ist in der zweiten Bohrung 56 angeordnet, liegt an der Bohrlochschulter 84 an und wird in der Bohrung mit Hilfe eines Sicherungsstiftes 86 gesichert, der durch ein Splintloch 88 in den Schlitz 82 eingreift. Der Drehzapfen 80 greift in die Ausnehmung 27 der Riegel 64 ein und wirkt mit der Drehzapfenfläche 74 in einer weiter unten noch näher beschriebenen Weise zusammen. Wie weiter oben dargelegt, bestehen das langgestreckte Rohr 22 und die äußere Hülse 26 des rohrförmigen Teiles 10 aus Rohrstücken aus gewöhnlichem Stahl. Bei der bevorzugten Ausführungsform der Erfindung besteht das Schloßgehäuse 14 aus Stahl und ist um den vorstehenden Teil 30 des Rohres 22 im Spritzgußverfahren herumgegossen, um mit diesem eine einteilige Konstruktion zu bilden. Die erste Bohrung 52 wird maschinell herausgearbeitet oder in anderer Weise hergestellt, nachdem das Schloßgehäuse 14 auf dem herausragenden Teil 30 des Rohres 22 geformt worden ist, wobei die erste Bohrung 52 und die Öffnungen 32 und 33 gleichzeitig hergestellt werden, um ihre genaue Fluchtung sicherzustellen.

Die geschlossene Konstruktion des Schloßgehäuses 14, das über dem Ende des rohrförmigen Teiles 10 angeordnet ist, schützt die umschlossenen Schloßteile vor falscher Handhabung da das Innere des Schlosses nur vom offenen Ende der Durchlaßöffnung 50 aus zugänglich ist. Dieser Zugang wird durch den stabförmigen Teil 12 versperrt.

Das Schloßgehäuse 14 steht über den rohrförmigen Teil 10 radial in einer Richtung vor, die dem Lenkradkranzhaken entgegengesetzt gerichtet ist, wie dies in Fig. 1 dargestellt ist, damit es nicht an die Lenkradspeichen anstößt oder die am Lenkrad angeordnete Hupe berührt. Das Schlüsselloch 78 öffnet sich in Richtung auf den sitzenden Fahrer und ist hierdurch leicht zugänglich.

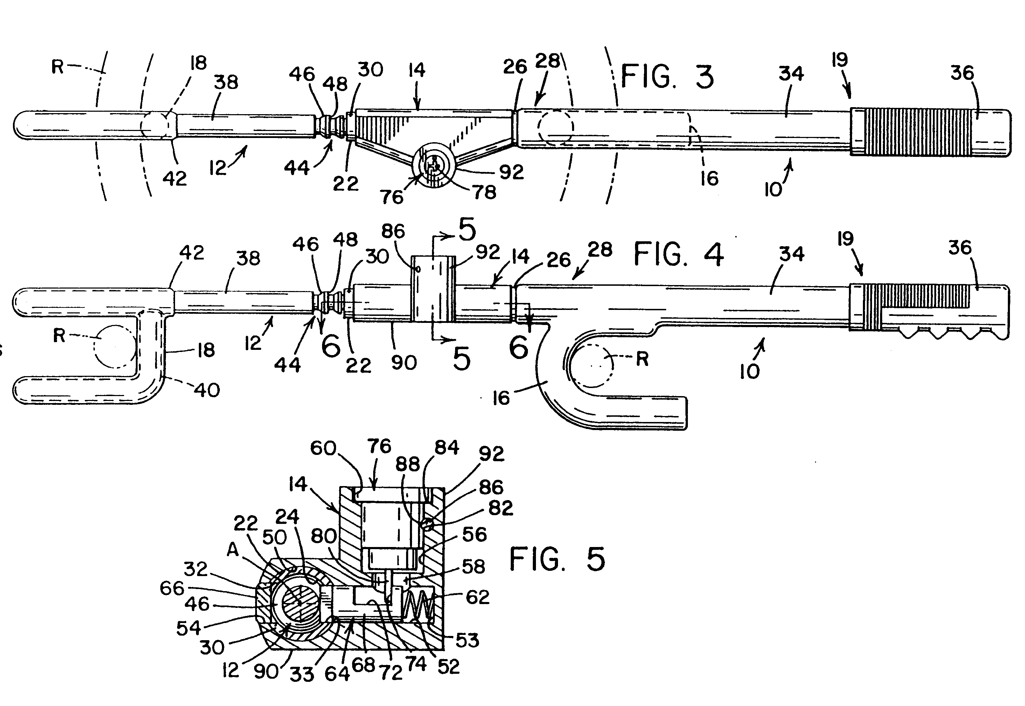

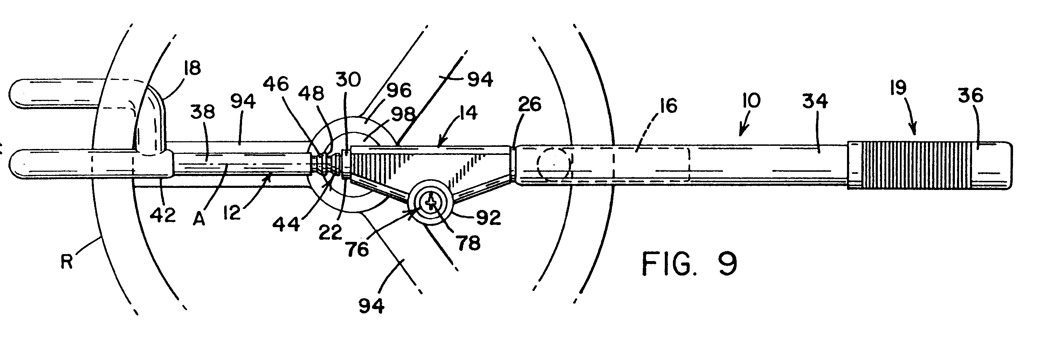

Mehr im einzelnen hat das Schloßgehäuse 14 eine ebene Rückseite 90, die dem Lenkrad zugewandt ist, wie dies in Fig. 4 erkennbar ist. Der Schließzylinder 76 ist in einem vorspringenden Teil 92 des Schloßgehäuses 14 untergebracht, der sich lotrecht zur Achse A von der Rückseite 90 und dem ersten Lenkradkranzhaken 16 weg erstreckt. Kein Teil der Lenkradverriegelung zwischen den Lenkradkranzhaken 16 und 18 erstreckt sich ins Innere des Lenkradkranzes R. Wie aus Fig. 9 hervorgeht, bleibt hierdurch Raum vor den Lenkradspeichen 94, der Nabe 96 und der Hupe 98, um die Lenkradverriegelung in Stellung zu bringen und die Finger des Benutzers um die Verriegelungsvorrichtung herum und hinter diese zu legen, wie dies beim Handhaben erforderlich ist.

Die Betätigung der Verriegelungsmittel 20 ist in den Fig. 6 bis 8 dargestellt. Wie aus Fig. 6 hervorgeht, drückt die Schraubenfeder 62 den Riegel 64 normalerweise aus der ersten Bohrung 52 heraus und in Eingriff mit einer ringförmigen Anschlagfläche 48 eines Klinkenzahnes 44 auf den stabförmigen Teil 12. Dieser wird hierdurch daran gehindert, sich axial ins Innere des rohrförmigen Teiles 10 zu schieben. Eine Bewegung des stabförmigen Teiles 12 axial aus dem rohrförmigen Teil 10 heraus, wie sie durch den in Fig. 7 dargestellten Pfeil angedeutet ist, veranlaßt die konische Auflagefläche 46 eines Klinkenzahnes 44, gegen die schräge Stirnfläche 70 des Riegels 64 zu drükken, wodurch der Riegel 64 entgegen der Wirkung der Schraubenfeder 62 ins Innere der ersten Bohrung 52 gedrückt wird und mit dem Klinkenzahn 44 außer Eingriff gerät. Die Schraubenfeder 62 schiebt dann den Riegel 64 wieder nach außen, so daß er in Eingriff mit dem nächsten Klinkenzahn 44 gerät und den stabförmigen Teil 12 gegenüber dem rohrförmigen Teil 10 in einer nächsten, im Abstand hiervon befindlichen Stellung lose festzuhalten, wie dies in Fig. 6 dargestellt ist. Wenn mit dem Schließzylinder 76 der Drehzapfen 80 gedreht wird, wie dies in Fig. 8 dargestellt ist, wird der Drehzapfen 80 veranlaßt, gegen die Drehzapfenfläche 74 zu drücken, wodurch der Riegel 64 ins Innere der ersten Bohrung 52 zurück und außer Eingriff mit dem Klinkenzahn 44 gezogen wird. Die Verriegelungsmittel bleiben dann in ihren in Fig. 8 dargestellten Stellungen und erlauben dem stabförmigen Teil 12 eine freie Axialbewegung in den rohrförmigen Teil 10 hinein, bis sie durch Gebrauch des Schlüssels verriegelt werden. Die Diebstahlsicherungsvorrichtung wird dadurch auf einem Lenkrad montiert, daß zuerst der erste Lenkradkranzhaken 16 über den Lenkradkranz geschoben wird, wie dies in Fig. 1 dargestellt ist. Danach wird der stabförmige Teil 12 axial aus dem rohrförmigen Teil 10 durch das Schloßgehäuse 14 hindurch herausgezogen, bis der zweite Lenkradkranzhaken 18 fest am Lenkradkranzhaken 18 fest am Lenkrad an einer Stelle anliegt, die derjenigen Stelle gegenüberliegt, an der der erste Lenkradkranzhaken 16 angreift.

Wie in Fig. 6 gezeigt, halten die Verriegelungsmittel den stabförmigen Teil 12 und damit die beiden Haken 16 und 18 in jeder der axial voneinander entfernten Stellungen fest, die von dem Zwischenraum zwischen den Klinkenzähnen 44 definiert werden, wobei der stabförmige Teil 12 beim Vor- und Zurückschieben nicht mit der Hand gehalten werden muß.

Die Vielzahl der Schaltzähne 44 ermöglicht viele Axialstellungen des ausgezogenen stabförmigen Teiles, so daß die Lenkradverriegelung über einen weiten Bereich einstellbar ist und sich den meisten Lenkradgrößen anpassen kann. Vor allem aber hält das Verriegelungsmittel den stabförmigen Teil und den zweiten Lenkradkranzhaken 18 in seiner axial aus dem rohrförmigen Teil 10 herausgezogenen und am Lenkradkranz montierten Stellung sicher fest, wie in Fig. 1 dargestellt ist. Hierbei ist die Verriegelungseinrichtung in ihrer montierten Stellung selbstverriegelnd und erfordert in der Verrieglungsstellung kein Abschließen von Hand.

Die Diebstahlsicherungsvorrichtung wird durch Aufschließen des Schließzylinders 76 entriegelt und erlaubt dann das axiale Zurückziehen des zweiten Lenkradkranzhakens 18 in Richtung auf den ersten Lenkradkranzhaken 16, um den Lenkradkranz freizumachen. Der stabförmige Teil 12 kann in vorteilhafter Weise vollständig in den rohrförmigen Teil 10 bis zu dem L-förmigen Teil 40 hineingeschoben werden, wodurch die Lenkradverriegelungseinrichtung zur Aufbewahrung vollständig zusammengelegt wird. Die Aufbewahrung der Lenkradverriegelung in ihrer Verriegelungsstellung ermöglicht den Verriegelungsmitteln 20, den stabförmigen Teil 12 festzuhalten und daran zu hindern, unkontrolliert aus dem rohrförmigen Teil herauszugleiten, während die Verriegelungsvorrichtung im Kofferraum oder unter dem Sitz des Fahrzeuges aufbewahrt wird. Gleichzeitig ist die Lenkradverriegelung, wie oben beschrieben, zur Befestigung vorbereitet, ohne daß hierfür ein Schlüssel verwendet werden muß.

Andere Merkmale und Vorteile der Erfindung ergeben sich aus dem oben beschriebenen konstruktiven Aufbau. Die Zusammenfassung der Verriegelungselemente im Inneren des Schloßgehäuses 14 und dessen Befestigung an einem Ende des rohrförmigen Teiles 10 schützt diese Teile vor dem Zugriff eines potentiellen Diebes. Der Zusammenbau des Schloßgehäuses 14 mit dem rohrförmigen Teil 10 bietet nach außen hin keine Aufstemmpunkte, an denen ein Einbruchswerkzeug angesetzt werden könnte. Die Anordnung des Riegels und der zugehörigen Teile im Inneren des Schloßgehäuses 14 schützt ferner die Finger eines Benutzers davor, eingeklemmt zu werden. Auch kann die doppelwandige Rohrkonstruktion nicht leicht eingesägt und zerstört werden.

**Patentansprüche**

1. An einem Fahrzeuglenkrad montierte Diebstahlsicherungsvorrichtung mit einem rohrförmigen Teil (10), der sich längs einer inneren Achse (A) erstreckt und an dem erste Einhakmittel (16) befestigt sind, die von innen in den Kranz (R) des Lenkrades eingreifen; mit einem langgestreckten, stabförmigen Teil (12), der teleskopartig von dem rohrförmigen Teil (10) aufgenommen wird und an dem zweite Einhakmittel (18) befestigt sind, die den ersten Einhakmitteln (16) gegenüberliegen und von innen in den Kranz (R) des Lenkrades eingreifen; wobei einer der Teile (10, 12) ein über sein Einhakmittel (16, 18) vorstehendes Teil (19) aufweist, das im Fahrzeuginneren anstoßen soll, wenn das Lenkrad mit der daran befestigten Diebstahlsicherungsvorrichtung gedreht wird; mit Verriegelungsmitteln, die ein am rohrförmigen Teil (10) angebrachtes Schloßgehäuse (14) aufweisen und dem stabförmigen Teil (12) eine Teleskopbewegung aus einer zusammengeschobenen Stellung, in der sich der stabförmige Teil (12) im wesentlichen in Inneren des rohrförmigen Teiles (10) befindet, in eine Verriegelungsstellung gestatten, in der der stabförmige Teil (12) axial aus dem rohrförmigen Teil (10) soweit herausgezogen ist, daß die Einhakmittel (16, 18) den Lenkradkranz (R) von innen her berühen, **dadurch gekennzeichnet**, daß der stabförmige Teil (12) mehrere ihn rings umgebende Klinkenzähne (44) aufweist, welche in Längsrichtung einander benachbart sind und denjenigen Teil des stabförmigen Teiles (12) umgeben, der teleskopartig in dem rohrförmigen Teil (10) aufgenommen werden kann, und daß jeder Klinkenzahn (44) eine flache, ringförmige, zu der inneren Achse (A) senkrecht stehende Anschlagfläche (48) und eine konische Auflagefläche (46) aufweist, die in einer dem zweiten Einhakmittel (18) entgegengesetzten Richtung sich erweitert und die im Durchmesser größer wird, wenn der stabförmige Teil (12) teleskopartig aus dem rohrförmigen Teil (10) herausgezogen wird und daß eine im Schloßgehäuse (14) angeordnete, durch ein Federmittel (62) belastete Schaltratsche (64) in Berührung mit den Klinkenzahnflächen (46, 48) gehalten wird, um eine gegenseitige Verdrehung von stabförmigem Teil (12) und rohrförmigem Teil (10) zu ermöglichen, wenn der stabförmige Teil (12) aus dem rohrförmigen Teil (10) herausgezogen wird, während eine Axialbewegung des stabförmigen Teiles (12) in den rohrförmigen Teil (10) hinein dadurch verhindert wird, daß die Schaltratsche (64) gegen eine der senkrechten Anschlagflächen (48) stößt und daß im Schloßgehäuse (14) ein mit einem Schlüssel betätigbares Schloß (76) vorgesehen ist, das die Schaltratsche (64) entgegen der Federwirkung aus dem Eingriff der Schaltzähne (44) zurückzieht, wenn der Schlüssel betätigt wird, um dem stabförmigen Teil (12) zu gestatten, sich teleskopartig in beiden Richtungen zu bewegen.

2. Vorrichtung nach Anspruch 1, **dadurch gekennzeichnet**, daß der stabförmige Teil (12) in einem zylindrischen Rohr (22) gleitet, das einerseits an dem rohrförmigen Teil (10) und andererseits an einem Teil des Schloßgehäuses (14) befestigt ist, welches das Schloß (76) enthält und daß das Schloßgehäuse (14) eine an einem Ende verschlossene Bohrung (52) aufweist, die sich zu einer in der Wandung des Rohres (22) angeordneten Öffnung (33) erstreckt und daß in der Bohrung (52) ein Riegel (64) angeordnet ist, dessen eines Ende(70) in die Öffnung (33) eintreten kann und daß der Riegel (64) eine sich in dessen Längsrichtung erstreckende Ausnehmung (72) von begrenzter Länge aufweist, die mit einem Drehzapfen (80) zusammenwirkt, wenn dieser in die Entriegelungsstellung bewegt wird und daß in der an einem Ende verschlossenen Bohrung (52) eine Feder zwischen dem Riegel (64) und dem Ende der Bohrung (52) angeordnet ist, die den Riegel (68) gegen die Klinkenzähne (44) auf dem stabförmigen Teil (12) drückt, wenn sich der Drehzapfen (80) in seiner Verriegelungsstellung befindet, so daß das Spiel zwischen dem stabförmigen Teil (12) und dem Schloßgehäuse (14) aufgehoben wird und der stabförmige Teil (12) das Gehäuse (14) diametral gegenüber der Öffnung (33) berührt, wobei der stabförmige Teil (12) präzise wirksam einrasten kann, wenn er axial aus dem rohrförmigen Teil (10) und dem Schloßgehäuse (14) herausgezogen wird.

3. Vorrichtung nach Anspruch 1 oder 2, **dadurch gekennzeichnet**, daß jeder Klinkenzahn (44) auch eine sich in Längsrichtung erstreckende, zylindrische Ruhefläche aufweist, die neben dem kleineren Durchmesser der kegelstumpfförmigen Fläche (46) angeordnet ist und sich bis zu der Anschlagfläche (48) eines benachbarten Zahnes erstreckt und daß das Riegelende an seinem Ende eine Abflachung aufweist, die nicht größer ist als die Länge der Ruhefläche, um deutliche Anschlagpositionen zu schaffen, wenn der stabförmige Teil (12) aus dem rohrförmigen Teil (10) herausgezogen wird.

4. Vorrichtung nach Anspruch 1, **dadurch gekennzeichnet**, daß der stabförmige Teil (12) die Form einer Stange mit kreisrundem Querschnitt hat, und daß der rohrförmige Teil (10) als Rohr mit kreisrundem Querschnitt ausgebildet ist.

5. Vorrichtung nach einem der Ansprüche 1 bis 4, **dadurch gekennzeichnet**, daß der Riegel (64) als Riegelstift (68) ausgebildet ist, der in seinem mittleren Teil eine Ausnehmung (72) mit einer Drehzapfenfläche(74) und an seinem freien, der Öffnung (33) zugewandten Ende eine schräge Stirnfläche (70) aufweist, die mit den konischen Flächen (46) der Zähne (44) des stabförmigen Teiles (12) zusammenwirkt.

6. Vorrichtung nach einem der Ansprüche 1 bis 5, **dadurch gekennzeichnet**, daß im Schloßgehäuse (14) eine zweite Bohrung (56) angeordnet ist, deren inneres Ende (58) in die erste Bohrung (52) mündet und in der ein Schließzylinder (76) mit einem Drehzapfen (80) angeordnet ist, der in die Ausnehmung (72) des Riegelstiftes (68) eingreift und diesen bei seiner Drehung mit dem Schließzylinder gegen die Feder (62) drückt, wenn er aus seiner Verriegelungstellung in seine Entriegelungsstellung gebracht wird.

## Claims

1. Antitheft device mounted on a vehicle steering wheel and comprising a tubular part (10) which extends along an inner axis (A) and on which first hook-in means (16) are fastened which engage from inside in the rim (R) of the steering wheel, and comprising an elongated rod-like part (12) which is received telescopically by the tubular part (10) and on which second hook-in means (18) are fastened which lie opposite the first hook-in means (16) and engage from inside in the rim (R) of the steering wheel, one of the parts (10, 12) having a portion (19) projecting beyond its hook-in means (16, 18) and intended to strike against the interior of the vehicle if the steering wheel with the antitheft device fastened to it is turned, and comprising locking means which have a lock casing (14) mounted on the tubular part (10) and enable the rod-like part (12) to make a telescopic movement from a retracted position, in which the rod-like part (12) is situated substantially inside the tubular part (10), to a locking position in which the rod-like part (12) is pulled axially out of the tubular part (10) so far that the hook-in means (16, 18) are in contact from inside with the steering wheel rim (R), characterised in that the rod-like part (12) has a plurality of ratchet teeth (44) which extend around it, adjoin one another in the longitudinal direction and surround that portion of the rod-like part (12) which can be telescopically received in the tubular part (10), and that each ratchet tooth (44) has a flat annular stop surface (48) at right angles to the inner axis (A) and a conical support surface (46) which widens in a direction away from the second hook-in means (18) and whose diameter increases when the rod-like part (12) is pulled telescopically out of the tubular part (10), and that a ratchet pawl (64) disposed in the lock casing (14) is held by a spring means (62) in contact with the ratchet tooth surfaces (46, 48) in order to allow mutual turning of the rod-like part (12) and the tubular part (10) when the rod-like part (12) is pulled out of the tubular part (10), while an axial movement of the rod-like part (12) into the interior of the tubular part (10) is prevented by the fact that the ratchet pawl (64) strikes against one of the vertical stop surfaces (48), and that a key operated lock (76) is provided in the lock casing (14) and pulls the ratchet pawl (64) back out of engagement with the ratchet teeth (44), against the action of the spring, when the key is operated to allow the rod-like part (12) to move telescopically in both directions.

2. Device according to Claim 1, characterised in that the rod-like part (12) slides in a cylindrical tube (22) which is fastened at one end to the tubular part (10) and at the other end to a part of the lock casing (14) containing the lock (76), and that the lock casing (14) has a bore (52) which is closed at one end and which extends to an opening (33) provided in the wall of the tube (22), and that in the bore (52) a bolt (64) is disposed, of which one end (70) can enter the opening (33), and that the bolt (64) has a recess (72) of limited length, which extends in the longitudinal direction of the bolt and cooperates with a pivot (80) when the latter is moved into the unlocking position, and that in the bore (52) closed at one end a spring is disposed between the bolt (64) and the end of the bore (52), which spring presses the bolt (68) against the ratchet teeth (44) on the rod-like part (12) when the pivot (80) is in its locking position, so that the clearance between the rod-like part (12) and the lock casing (14) is eliminated and the rod-like part (12) makes contact with the casing (14) diametrically opposite the opening (33), so that the rod-like part (12) can engage accurately and in an effective manner when it is pulled axially out of the tubular part (10) and the lock casing (14).

3. Device according to Claim 1 or 2, characterised in that each ratchet tooth (44) also has a cylindrical rest surface which extends in the longitudinal direction, is disposed next to the smaller diameter of the frustoconical surface (46) and extends to the stop surface (48) of an adjoining tooth, and that the bolt end has at its end a flat which is not larger than the length of the rest surface, in order to form definite stop positions when the rod-like part (12) is pulled out of the tubular part (10).

4. Device according to Claim 1, characterised in that the rod-like part (12) is in the form of a bar having a circular cross-section, and that the tubular part (10) is in the form of a tube having a circular cross-section.

5. Device according to one of Claims 1 to 4, characterised in that the bolt (64) is in the form of a locking pin (68) which in its middle part has a recess (72) provided with a pivot surface (74) and at its free end, facing the opening (33), has an inclined end face (70) cooperating with the conical surfaces (46) of the teeth (44) on the rod-like part (12).

6. Device according to one of Claims 1 to 5, characterised in that in the lock casing (14) a second bore (56) is provided, the inner end (58) of which leads into the first bore (52) and in which a lock cylinder (76) provided with a pivot (80) is disposed, the latter engaging in the recess (72) in the locking pin (68) and, when it is turned with the lock cylinder, pressing the locking pin against the spring (62) when brought from its locking position into its unlocking position.

## Revendications

1. Dispositif de sécurité antivol monté sur un volant d'automobile, comprenant une partie tubulaire (10), s'étendant le long d'un axe intérieur (A) et à laquelle sont fixés des premiers moyens d'accrochage (16), qui s'engagent par l'intérieur dans la couronne (R) du volant; avec une partie en forme de barre (12) allongée, logée de manière télescopique par la partie tubulaire (10) et sur laquelle sont fixés des deuxièmes moyens d'accrochage (18), placés à l'opposé des premiers moyens d'accrochage (16) et s'engageant, par l'intérieur, dans la couronne (R) du volant; où l'une des parties (10,12) présente une partie (19) faisant saillie au-dessus de son moyen d'accrochage (16,18), devant venir buter quelque part dans l'habitacle, lorsque le volent est tourné avec le dispositif de sécurité antivol fixé dessus; avec des moyens de verrouillage qui présentent un carter de serrure (14) monté sur la partie tubulaire (10) et qui permet à la partie en forme de barre (12) d'effectuer un mouvement télescopique, à partir d'une position rétractée, dans laquelle la partie en forme de barre (12) se trouve sensiblement à l'intérieur de la partie tubulaire (10), pour passer en une position de verrouillage, dans laquelle la partie en forme de barre (12) est déployée axialement hors de la partie tubulaire (10), d'une distance telle que les moyens d'accrochage (16,18) viennent en contact depuis l'intérieur avec la couronne de volant (R), caractérisé en ce que la partie en forme de barre (12) présente plusieurs dents de cliquet (44) entourant son pourtour et voisines les unes des autres en direction longitudinale et qui entourent la partie de la partie en forme de barre (12) qui peut être logée de façon télescopique dans la partie tubulaire (10), et en ce que chaque dent de cliquet (44) présente une face de butée (48) plate, annulaire, perpendiculaire par rapport à l'axe intérieur (A), et une face de pose conique (46), qui va en s'agrandissant dans une direction opposée au deuxième moyen d'accrochage (18) et dont le diamètre devient plus grand lorsque la partie en forme de barre (12) est déployée de façon télescopique hors de la partie tubulaire (10) et en ce qu'un cliquet d'enclenchement (44), disposé dans le carter de serrure (14), sollicité par un moyen élastique (62), est maintenu en contact avec les faces dentées de cliquet (46,48), afin de permettre une rotation réciproque de la partie en forme de barre (12) et la partie tubulaire (10), lorsque la partie en forme de barre (12) est déployée hors de la partie tubulaire (10), tandis que tout mouvement axial de pénétration de la partie en forme de barre (12) dans la partie tubulaire (10) est empêché par le fait que le cliquet d'enclenchement (64) touche l'une des faces de butée (48) perpendiculaires et en ce qu'est prévu dans le carter de serrure (14) une serrure (76) actionnable à l'aide d'une clé, qui fait se rétracter le cliquet d'enclenchement (64) à l'encontre de la force élastique, hors de prise des dents d'enclenchement (44), lorsque la clé est actionnée, afin de permettre à la partie en forme de barre (12) de se déplacer de façon télescopique dans les deux directions.

2. Dispositif selon la revendication 1, caractérisé en ce que la partie en forme de barre (12) coulisse dans un tube cylindrique (22), qui est fixé, d'une part, à la partie tubulaire (10) et, d'autre part, à une partie du carter de serrure (14), qui contient la serrure (76) et en ce que le carter de serrure (14) présente un perçage (52) obturé à une extrémité, qui s'étend vers une ouverture (33), disposée dans la paroi du tube (22), et en ce que dans le perçage (52) est disposé un pêne (64) dont une extrémité (70) peut pénétrer dans l'ouverture (33) et en ce que le pêne (64) présente un évidement (64) qui s'étend dans sa direction longitudinale et est d'une longueur limitée et coopère avec un tourillon tournant (80), lorsque celui-ci est déplacé dans la position de déverrouillage et en ce que, dans le perçage (52) fermé à une extrémité, un ressort est disposé entre le pêne (64) et l'extrémité du perçage (52) qui presse les dents de cliquet (44) sur la partie en forme de barre (12), lorsque le tourillon tournant (80) se trouve dans sa position de verrouillage, de telle façon que le jeu entre la partie en forme de barre (12) et le carter de serrure (14) puisse être supprimé et que la partie en forme de barre (12) vienne en contact avec le carter (14), de façon diamétrale par rapport à l'ouverture, où la partie en forme de barre (12) peut s'encliqueter de façon précise et efficace lorsqu'elle est déployée axialement hors de la partie tubulaire (10) et du carter de serrure (14).

3. Dispositif selon la revendication 1 ou 2, caractérisé en ce que chaque dent de cliquet (44) présente également une face de contact cylindrique, s'étendant en direction longitudinale, qui est disposée à côté du petit diamètre de la face tronconique (46) et s'étend jusqu'à la face de butée (48) d'une dent voisine et en ce que l'extrémité du pêne présente sur son bout un méplat qui n'est pas plus grand que la face de contact, afin de créer des positions de butée nettes, lorsque la partie en forme de barre (12) est déployée hors de la partie tubulaire (10).

4. Dispositif selon la revendication 1, caractérisé en ce que la partie en forme de barre (12) présente la forme d'une barre à section transversale circulaire, et en ce que la partie tubulaire (10) est réalisée sous forme de tube à section transversale circulaire.

5. Dispositif selon l'une des revendications 1 à 4, caractérisé en ce que le pêne (64) est réalisé sous forme de goupille de verrouillage (68), présentant dans sa partie médiane un évidement (72) avec une face en tourillon tournant (74) et à son extrémité libre, tournée vers l'ouverture (33), une face frontale (70) inclinée, qui coopère avec les faces coniques (46) des dents de la partie en forme de barre (12).

6. Dispositif selon l'une des revendications 1 à 5, caractérisé en ce que, dans le carter de serrure (14) est disposé un deuxième perçage (56), dont l'extrémité intérieure (58) débouche dans le premier perçage (52) et dans lequel est disposé un cylindre de serrure (76), avec un tourillon tournant (80), qui vient s'engager dans l'évidement (72) de la goupille de verrouillage (68) et presse celle-ci lors de sa rotation avec le cylindre de serrure contre le ressort (62), lorsqu'il est passé de sa position de verrouillage à sa position de déverrouil-lage.

FIG. I

FIG. 2

EP 0 374 453 B1

FIG. 3

FIG. 4

FIG. 5

EP 0 374 453 B1

FIG. 6

FIG. 7

FIG. 8

FIG. 9

EP 0 374 453 B1